# EUROPEAN PATENT APPLICATION

(11) **EP 4 148 266 A1**
(43) Date of publication of application: **15.03.2023**
(21) Application number: 21196097.6
(22) Date of filing: 10.09.2021
(51) Int. Cl.: F03B 13/18, F03B 13/20

(54) **A BOTTOM-HINGED WAVE ENERGY CONVERTER AND A METHOD FOR OPTIMIZING A BOTTOM-HINGED WAVE ENERGY CONVERTER**

(71) Applicant: Patentselskabet af 30. november 2014 ApS, 6700 Esbjerg (DK)
(72) Inventor: Wigant, Lars, 6852 Billum (DK)
(74) Representative: Patrade A/S

(57) **Abstract**

A bottom-hinged wave energy converter (WEC) comprising
- a foundation (10) defining an apparent foundation weight;
- a power converter (20) connected to the foundation (10), the power converter (20) comprises a crank (22);
- a flap arm (30) comprising along an arm axis (32) a crank end (34) connected to the crank (22) and a flap end (36);
- a flap (40) comprising a flap bottom (42) connected to the flap end (36), and a flap top (44) adapted to be at or near an ocean surface (102) during use, the flap (40) comprising a substantially circular or elliptic flap cross-section (46) in a cross-section plane (48) substantially perpendicular to the arm axis (32), which flap cross-section (46) is constant between or increases between the flap bottom (42) and the flap top (44) thereby defining a flap buoyancy, wherein the apparent foundation weight being lesser or greater than the flap buoyancy.

## Description

### Field of the Invention

The present invention relates to a bottom-hinged wave energy converter with a flap shape optimized for increasing power production. The bottom-hinged wave energy converter forming part of a gravity wave energy converter system or an anchored floating wave energy converter system. Both using same conceptual wave energy converter called bottom-hinged wave energy converter (called WEC).

The present invention relates to a method for optimizing a bottom-hinged wave energy converter to a local wave environment to increase mean power production and a method for transporting a bottom-hinged wave energy converter to a predetermined position.

### Background of the Invention

There is an ever-increasing demand for alternative energy sources to fossil fuels. Wave energy converters are one of the proposed alternative energy sources which are expected to replace fossil fuels.

There exists several different types of wave energy converters. One of these types are bottom-hinged wave energy converters as described in EP2864628B1.

In EP2864628B1 a wave power converter including a wave power converter housing with a bottom and a top, between which there is a distance limiting structure and through which there is a central axis, and wherein entirely or partially outside the wave power converter housing there is at least one preferably elongated paddle with a longitudinal direction of a first generatrix and a lower end and an upper end, and which paddle via a first connection is connected with a first power converter with a rotary axis preferably at right angles to the central axis and fastened to the wave power converter housing at the top.

However, studies of the paddle shape have shown that the paddle shape in EP2864628B1 is not an optimum solution for converting wave energy and thus there is a need for a more optimum shape of the bottom-hinged wave energy converter. Furthermore, there is a need for a method for optimizing a bottom-hinged wave energy converter as a function of a localized wave environment.

### Object of the Invention

It is an object of the invention to provide a bottom-hinged wave energy converter with an optimized shape and to provide a method for optimizing a bottom-hinged wave energy converter as a function of a localized wave environment.

### Description of the Invention

An object of the invention is achieved by a bottom-hinged wave energy converter. The bottom-hinged wave energy converters comprising
- a foundation defining an apparent foundation weight;
- a power converter connected to the foundation. The power converter comprises a crank; and
- a flap arm comprising along an arm axis a crank end connected to the crank and a flap end;
- a flap comprising a flap bottom connected to the flap end, and a flap top adapted to be at or near an ocean surface during use, the flap comprising a substantially circular or elliptic flap cross-section in a cross-section plane substantially perpendicular to the arm axis, which flap cross-section is constant between or varies between or increases between the flap bottom and the flap top thereby defining a flap buoyancy, wherein the apparent foundation weight being lesser or greater than the flap buoyancy.

The wave energy converter of the present invention is bottom hinged since the flap arm and the flap during use are above the power converter. The bottom hinge does not mean that the wave energy converter is positioned on the seafloor since the wave energy converter may be designed to float during use.

The foundation has a foundation mass and a foundation volume, the defined apparent foundation weight is the difference between the foundation mass and the mass of fluid displaced by the foundation. During use, the foundation mass is larger than the mass of the displaced fluid, however the foundation mass may be less than the mass of the displaced fluid during transportation of the bottom-hinged wave energy converter. The apparent foundation weight term is used in the present application instead of foundation buoyancy since the mass of the foundation in most cases will be greater than the mass of fluid displaced by the foundation.

The power converter and the flap arm may interact as described in EP2864628, however other bottom-hinged configurations are likewise possible.

The flap arm will typically be a cylindrical between the crank end connected to the power converter and the flap end.

The shape of the flap is defined by the flap cross-section and simulations have shown that the circular flap cross-section increases the mean power production compared to a elliptic flap cross-section, however an elliptic flap cross-section with an eccentricity between 0.05-0.5 will still increase the mean power production of the bottom-hinged wave energy converter compared to a bottom-hinged wave energy converter with a paddle having same cross-section area in the wave propagation direction.

The flap cross-section may be constant or vary or increase between the flap bottom and the flap top. Simulations have shown that the increase of the flap cross-section between the flap bottom and the flap top increases mean power production compared to a constant flap cross-section when having the same mean diameter. The wave energy is greatest near or at the ocean surface and a large flap cross-section at or near the ocean surface seems in simulations to increase the energy transfer from the wave to the flap.

The flap cross-section may increase linearly, concave, or convex between the flap bottom and the flap top.

The skilled person would understand that the flap top is not open ended, thus the cross-section must decrease at the flap top to close the flap. The flap top may have a spherical-like shape as shown in one or more of the figures.

The volume defined by the cross-section between the flap bottom and flap top defines the flap buoyancy as the flap buoyancy is the difference between the weight of the displaced fluid and the mass of the flap.

In the case where the apparent foundation weight is greater than the flap buoyancy, then foundation is posited at the seafloor due to gravity and the flap arm and flap extend towards the ocean surface and preferably the flap arm and flap extends to be at or near the mean ocean surface since the wave energy is greatest closest to the surface.

In the case where the apparent foundation weight is less than the flap buoyancy then the bottom-hinged wave energy converter may be positioned at an ocean surface and transported to a production site by dragging the bottom-hinged wave energy converter.

In the case where the apparent foundation weight is less than the flap buoyancy then the bottom-hinged wave energy converter may be positioned such that the flap top is at or near the ocean surface while the bottom-hinged wave energy converter floats in the ocean. The bottom-hinged wave energy converter is in this case anchored to the seafloor during use.

In an aspect, the flap may comprise
a drag coefficient between 0.6-1.0 or 0.7-0.9 and/or
an inertia coefficient between 1.5-1.8 or 1.6-1.7.

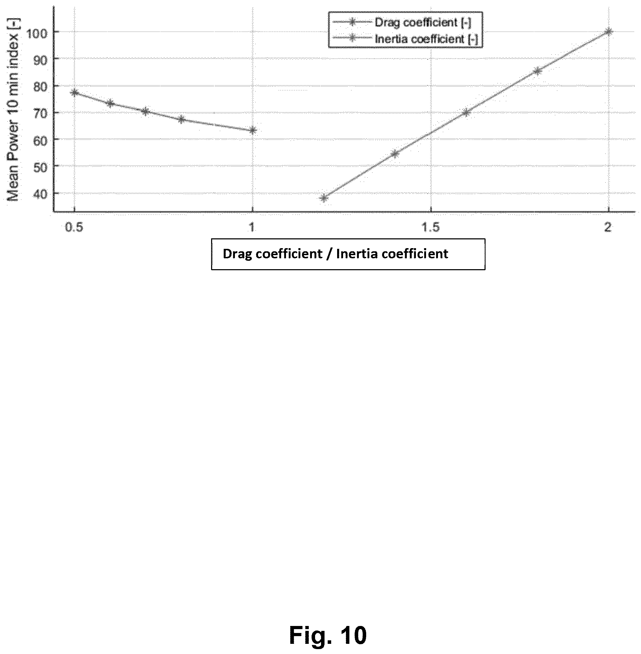

Simulations based on the relative velocity formulation of the Morison equation has been used to simulate power production and mean power production of the bottom-hinged wave energy converter according to the invention. The model is based on coefficients to model the contribution from inertia (linearly dependent on relative acceleration between float and ambient water) and drag (linearly dependent on the relative velocity squared). The simulations show that that the mean power production increases significantly with an increasing inertia coefficient, while it decreases with increasing drag coefficients. The optimization of the drag coefficient and the inertia coefficient shows that the ranges presented above results in the highest mean power production. Both the drag coefficient and the inertia coefficient are highly dependent on the geometry of the flap. See Figure 10 for a graph showing the relation between the drag coefficient and the inertia coefficient.

The previously described circular flap cross-section which preferably increases between the flap bottom and the flap top has in simulations shown to have a drag coefficient between 0.6-1.0 and an inertia coefficient between 1.5-1.8.

The simulations may further take mass distribution and the PTO stiffness into account.

In an aspect, the foundation may comprise a ballast chamber to adjust the apparent foundation weight.

The ballast chamber enables the bottom-hinged wave energy converter to adjust the apparent foundation weight.

The ballast chamber may for example be filled with water such that the the bottom-hinged wave energy converter is gravity anchored to the seafloor.

The ballast chamber may for example be vacated of water to make the bottom-hinged wave energy converter float or even make the foundation float at an ocean surface.

In an aspect, the flap may be substantially cone-shaped. Simulations have shown that the substantially cone-shaped flap has the highest mean power production compared to other designs.

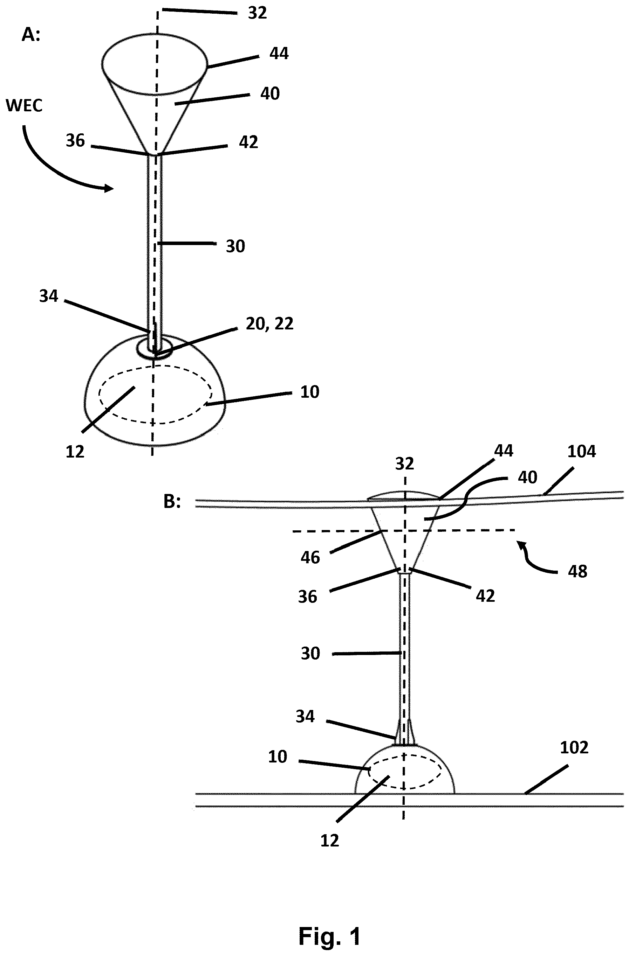

An example of a cone-shaped flap is shown in figure 1.

In an aspect, the flap buoyancy may be chosen as a function of localised wave climate such that the eigenfrequency of the wave energy converter is substantially equal to a mean wave frequency of a dominating wave of the localised wave climate.

The flap buoyancy can be increased or decreased by scaling the flap proportionally such as the cone-shaped flap, thereby the eigenfrequency of the wave energy converter is changed. Tests showed that mean power production was greatest when the eigenfrequency is substantially equal to the mean wave frequency of the localised wave climate.

In an aspect, the wave energy converter may comprise one or more anchors attached to a seafloor and to one or more nodes on the foundation and where the wave energy converter being a floating wave energy converter as the apparent foundation weight is slightly lower than the flap buoyancy, such that the net buoyancy is positive.

In an optimum configuration the apparent foundation weight and the flap buoyancy are chosen such that the flap top is positioned at or near the ocean surface to maximise mean power production. The anchor system define the gap between flap top and surface (total buoyance > 0)

An object of the invention is achieved by a wave energy converter system, which may comprise two, three or more of the previous described bottom-hinged wave energy converters, wherein each wave energy converter being connected to at least one other wave energy converter by a connection member forming together with the foundations a foundation structure.

Thereby, an entire system is formed by linking bottom-hinged wave energy converters using connection members. The connection members may be fitted with a pipeline system for distributing the generated power such as the hydraulic generated power.

The wave energy converter system may be gravity anchored. The foundation structure may be fitted with one or more ballast tanks used for controlling the apparent weight.

In an aspect, the foundation structure comprises a hydro turbine generator and/or a desalination unit powered by the two, three or more of the bottom-hinged wave energy converters.

Thereby, the wave energy converter system may produce energy or clean water.

In an aspect, the foundation structure may have a horizontal structure length at least equal to or greater than a local mean wavelength such as 2, 3, 5 ,10 or more times greater than the local mean wave wavelength.

The forces from the waves is averaged out when the horizontal structure length increases, thus the stability of the entire wave energy converter system increases.

An object of the invention is achieved by a anchored floating wave energy converter system, which may comprise two, three or more of the previous described bottom-hinged wave energy converters wherein each wave energy converter is connected to at least one other wave energy converter by a connection member forming together with the foundations a foundation structure. The foundation structure defines a foundation structure which apparent weight being less than the flap buoyancies and the anchored floating wave energy converter system comprises one or more anchors attached to a seafloor and to one or more nodes on the foundation structure.

The foundation structure apparent weight is preferably adjusted such that the two, three or more top flaps are positioned at or near the ocean surface since the wave energy is greatest closer to the ocean surface.

The anchored floating wave energy converter system enables wave energy generation at an area where the distance between the seafloor and ocean surface is so large that it is not viable to have a gravity anchored wave energy converter system as the flap arm and the flap would become too large.

In an aspect, the anchored floating wave energy converter system comprises a pylon extending during use above an ocean surface.

Optionally, the pylon is adapted for receiving a wind turbine tower.

Optionally, the pylon is adapted for receiving a hydro turbine generator operational connected to the two, three or more of the power converters.

Optionally, the pylon is adapted for receiving a desalination unit operationally connected to the two, three or more of the power converters.

Optionally, the pylon is adapted for water splitting by electrolysing pricing hydrogen/oxygen.

Optionally, the pylon is adapted for combined hydro turbine electrical production, water desalination and water splitting by electrolysing pricing hydrogen/oxygen.

An object of the invention is achieved by a method for optimizing a bottom-hinged wave energy converter to a local wave environment to increase power production, the method comprising the steps of
- providing wave statistics of the local wave environment including wavelength distribution, wave height distribution and wave occurrence;
- providing parameters of a bottom-hinged wave energy converter, the parameters including flap cross-sections between flap bottom and flap top;
- optimizing the parameters as a function of the wave statistics of the local wave environment to maximize mean power production.

Thereby, the resulting bottom-hinged wave energy converter will be optimized to the local wave environment and the total mean power production will increase as a result.

The parameters may include length of the flap arm, and/or radius of the flap arm.

The parameters may include height of the flap i.e. distance between the flap bottom and flap top.

The parameters may include mass distribution along the flap arm and/or flap.

The parameters may include PTO stiffness by configuring flap arm, cylinder pump length, cylinder piston effective area and piston operating pressure.

In an aspect, the parameters may include drag coefficient and/or inertia coefficient of the bottom-hinged wave energy converter.

The method for optimizing the production by adjusting the mass distribution of the flap
- for instance ability to move mass up and down (adjusting natural frequency) inside the flap for actual sea state.

An object of the invention is achieved by a method for transporting a bottom-hinged wave energy converter to a predetermined position. The method comprises steps of
- providing a bottom-hinged wave energy converter as previously described, wherein the foundation comprises a ballast chamber to adjust the apparent foundation weight;
- adjusting a water volume of the ballast chamber such that the wave energy converter float at an ocean surface;
- dragging the wave energy converter to the predetermined position; and
- adjusting water volume of the ballast chamber, such that the wave energy converter is at least lowered at the predetermined position.

Thereby, the bottom-hinged wave energy converter can be transported by dragging the bottom-hinged wave energy converter along the ocean surface. Thus, there is no need for designing a vessel for carrying or storing the bottom-hinged wave energy converter.

The predetermined position may be at shallow to intermediate water, where the wave energy converter can be gravity anchored.

The predetermined position may be at intermediate to deep water, where the wave energy converter should or must be floating and anchored to the seafloor.

The method for transportation can be performed for the previously described anchored floating wave energy converter system and/or the previously described wave energy converter system by adjusting water volume of the ballast chamber or ballast chambers.

An object of the invention is achieved by use of a substantially cone-shaped body as a flap of a bottom-hinged wave energy converter, wherein the cone-shaped body comprising along a body axis a flap bottom and a flap top, and a substantially circular or elliptic flap cross-section in a cross-section plane perpendicular to the body axis, which flap cross-section increases between a flap bottom and a flap top, thereby defining a flap buoyancy.

The shape of the flap is defined by the flap cross-section and simulations have shown that the circular flap cross-section increases the mean power production compared to an elliptic flap cross-section, however an elliptic flap cross-section with an eccentricity between 0.05-0.5 will still increase the mean power production of the bottom-hinged wave energy converter compared to a bottom-hinged wave energy converter with a paddle.

The wave energy is greatest near or at the ocean surface and a large flap cross-section at or near the ocean surface seems in simulations to increase the energy transfer from the wave to the flap.

The flap cross-section may increase linearly between the flap bottom and the flap top.

The skilled person would understand that the flap top is not open ended, thus the cross-section must decrease at the flap top to close the flap. The flap top may have a spherical-like shape as shown in one or more of the figures.

The volume defined by the cross-section between the flap bottom and flap top defines the flap buoyancy.

### Description of the Drawing

Fig. 1 illustrates a bottom-hinged wave energy converter;
Fig. 2 illustrates a prior art power converter;
Fig. 3 illustrates a wave energy converter system comprising three bottom-hinged wave energy converter;
Fig. 4 illustrates a wave energy converter system comprising five bottom-hinged wave energy converter;
Fig. 5 illustrates a anchored floating wave energy converter system comprising three bottom-hinged wave energy converter;
Fig. 6 illustrates a anchored floating wave energy converter system comprising five bottom-hinged wave energy converter;
Fig. 7 illustrates a anchored floating wave energy converter system comprising six bottom-hinged wave energy converter and a central pylon;
Fig. 8 illustrates a bottom-hinged wave energy converter, wherein power converter is releasably attached to the foundation;
Fig. 9 illustrates a wave energy converter system or a anchored floating wave energy converter system; and
Fig. 10 illustrates a graph showing mean power index as a function of a drag coefficient and an inertia coefficient.

| Item | Reference |
|---|---|
| Bottom-hinged wave energy converter | WEC |
| Floating wave energy converter | FWEC |
| Wave energy converter system | WECS |
| Anchored floating wave energy converter system | FS |
| Foundation | 10 |
| Ballast chamber | 12 |
| Connection member | 14 |
| Foundation structure | 16 |
| Horizontal structure length | 18 |
| Power converter | 20 |
| Crank | 22 |
| Flap arm | 30 |
| Arm axis | 32 |
| Crank end | 34 |
| Flap end | 36 |
| Flap | 40 |
| Flap bottom | 42 |
| Flap top | 44 |
| Flap cross-section | 46 |
| Cross-section plane | 48 |
| Anchors | 60 |
| Pylon | 90 |
| Seafloor | 102 |
| Ocean surface | 104 |

### Detailed Description of the Invention

Fig. 1 illustrates a bottom-hinged wave energy converter WEC.

The bottom-hinged wave energy converter WEC comprises a foundation 10 defining an apparent foundation weight as previously defined.

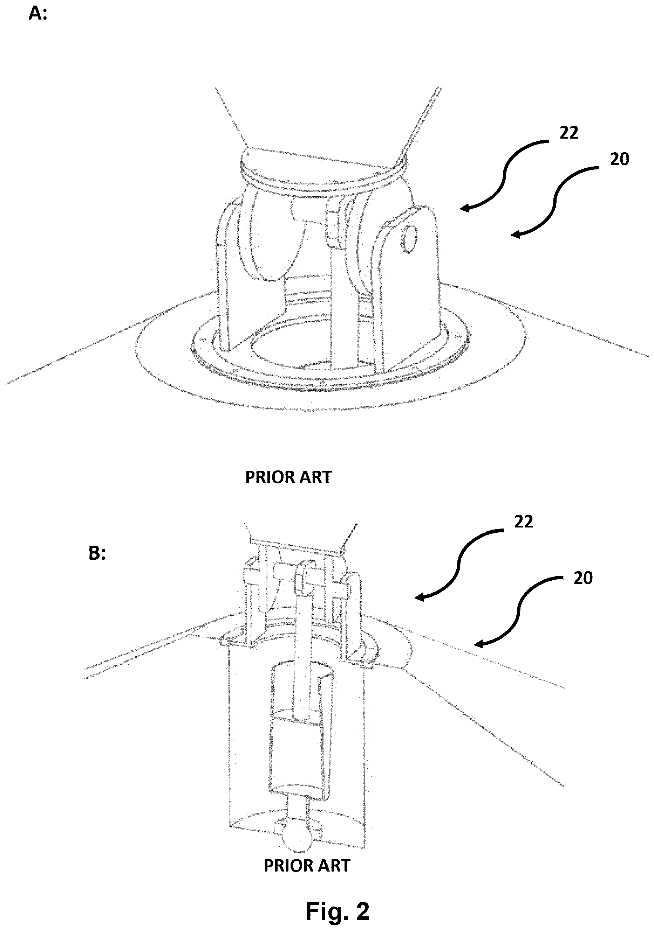

The bottom-hinged wave energy converter WEC comprises a power converter 20 connected to the foundation 10 and to a crank 22. Figure 2 discloses more details of the power converter 20 and crank 22.

The bottom-hinged wave energy converter WEC comprises a flap arm 30 extending along an arm axis 32 from a crank end 34 to a flap end. The crank end 34 is connected to the crank 22.

The bottom-hinged wave energy converter WEC comprises a flap 40 comprising a flap bottom 42 connected to the flap end 36, and a flap top 44 adapted to be at or near an ocean surface 102 during use as shown in figure IB.

The flap comprises a substantially circular flap cross-section 46 in a cross-section plane 48 substantially perpendicular to the arm axis 32. The flap 40 has a cone shape where the flap cross-section 46 increases between the flap bottom 42 and the flap top 44 thereby defining a flap buoyancy.

The apparent foundation weight can be adapted to be lesser or greater than the flap buoyancy by filling or emptying a ballast chamber 12. In the present case the apparent foundation weight is greater than the flap buoyancy since the bottom-hinged wave energy converter WEC is gravity anchored to a seafloor.

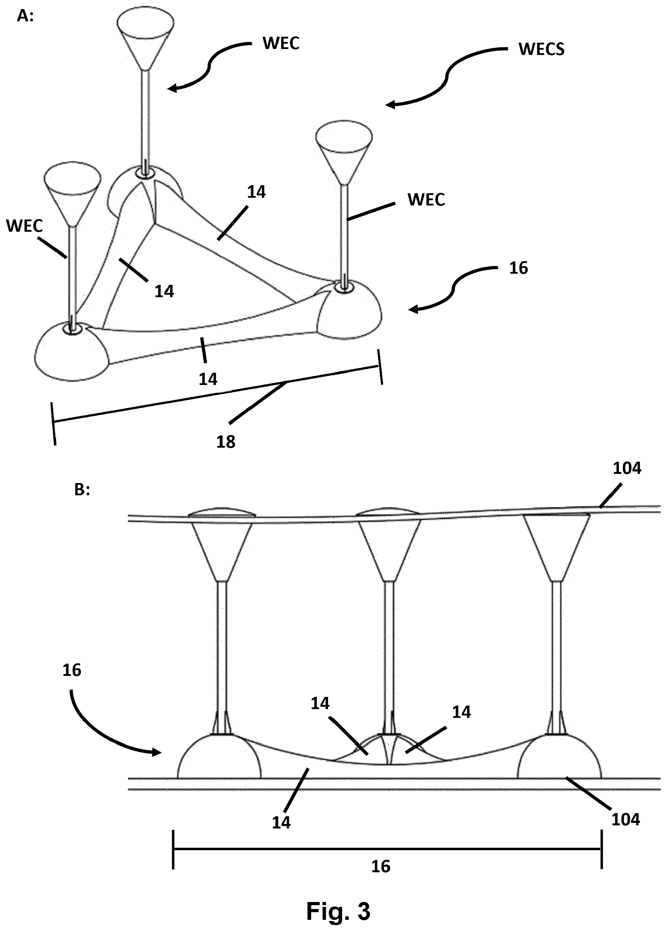

The bottom-hinged wave energy converter WEC shown in Fig. 1 is the basis WEC unit shown in figures 3-9.

Fig. 2 illustrates a prior art power converter 20. The prior art power converter 20 can be used in the EP2864628B1 according to the invention. The power converter 20 is connected to a crank 22.

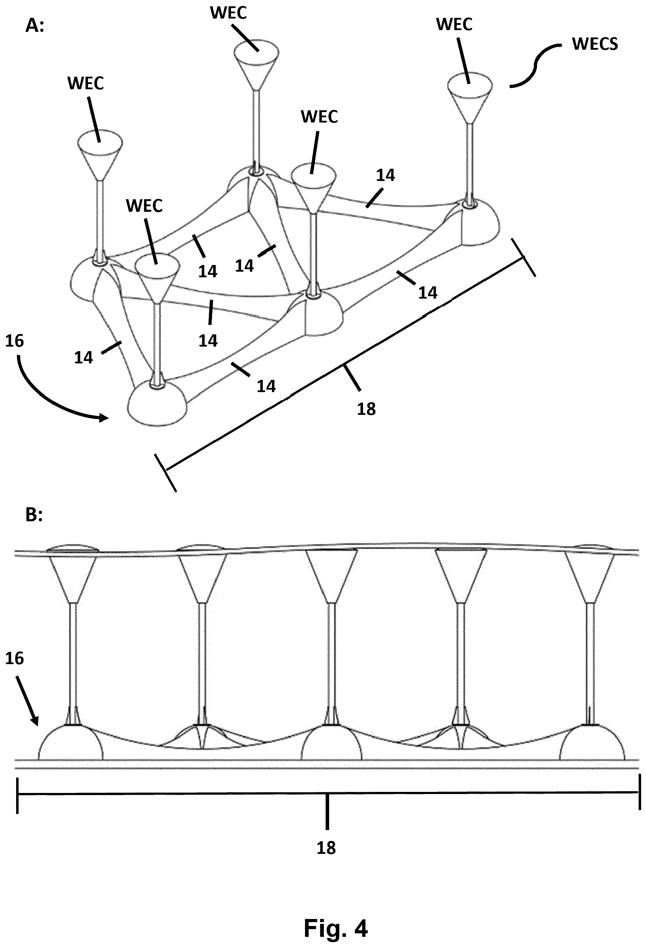

Fig. 3 and Fig. 4 illustrates a wave energy converter system WECS comprising three bottom-hinged wave energy converters WEC and five bottom-hinged wave energy converters WEC.

In Fig. 3 and Fig. 4, each wave energy converter WEC is connected to at least one other wave energy converter WEC by a connection member 14 forming together with the foundations 10 a foundation structure 16.

The foundation structure 16 may comprise a not shown hydro turbine generator and/or a not shown desalination unit powered by the three or five bottom-hinged wave energy converters WEC.

The wave energy converter system WECS defines a horizontal structure length 18.

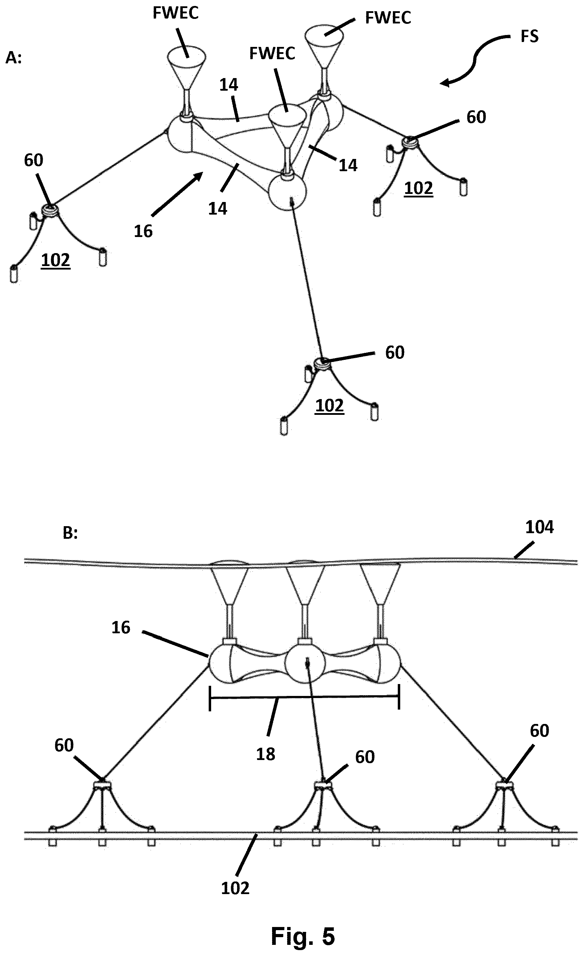

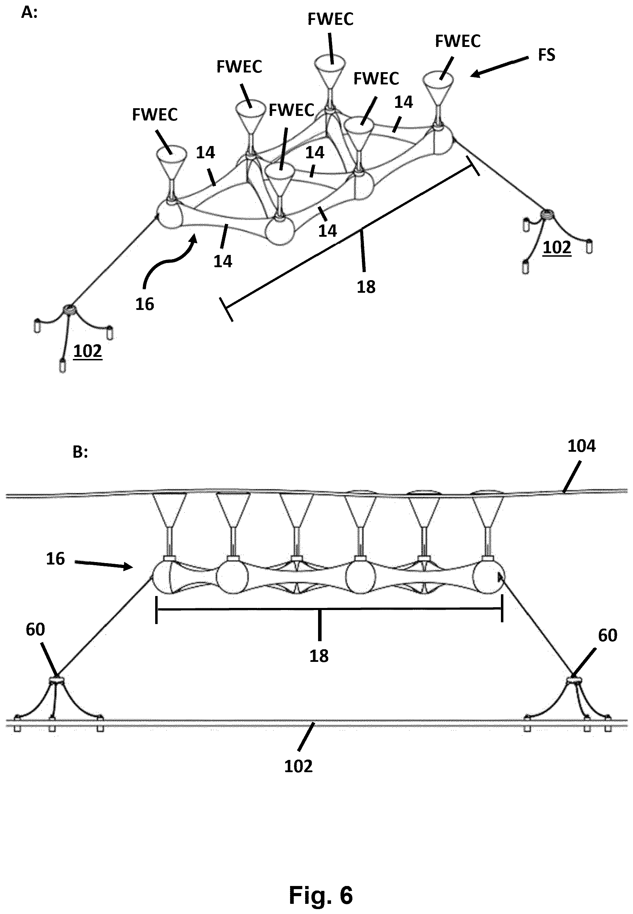

Fig. 5 and Fig. 6 illustrates a anchored floating wave energy converter system FS comprising three floating bottom-hinged wave energy converters FWEC and six floating bottom-hinged wave energy converters FWECs.

In Fig. 5 and Fig. 6, each floating wave energy converter FWEC is connected to at least one other floating wave energy converter FWEC by a connection member 14 forming together with the foundations 10 a foundation structure 16.

The foundation structure 16 may comprise a not shown hydro turbine generator and/or a not shown desalination unit powered by the three or six floating bottom-hinged wave energy converters FWEC.

The anchored floating wave energy converter system WECS defines a horizontal structure length 18.

The floating structures FS in Fig. 5 and fig. 6 are anchored to the seafloor 102 by anchors 60 attached to a seafloor 102 and to nodes on the foundation structure 16. There are lines extending between the anchors 60 and the nodes.

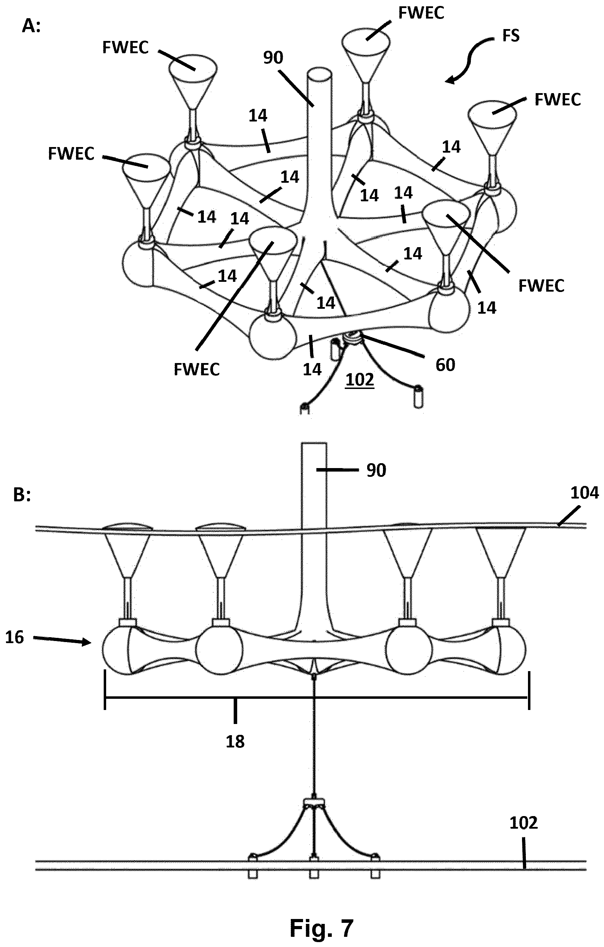

Fig. 7 illustrates a anchored floating wave energy converter system FS comprising six bottom-hinged wave energy converter and a central pylon 90.

The floating structures FS is anchored to the seafloor 102 by one anchor 60 attached to a seafloor 102 and to a node on the foundation structure 16. There are lines extending between the anchors 60 and the node.

The pylon 90 may comprise a not shown hydro turbine generator and/or a not shown desalination unit powered by the six floating bottom-hinged wave energy converters FWEC.

The pylon 90 may be connected to a wind turbine generator.

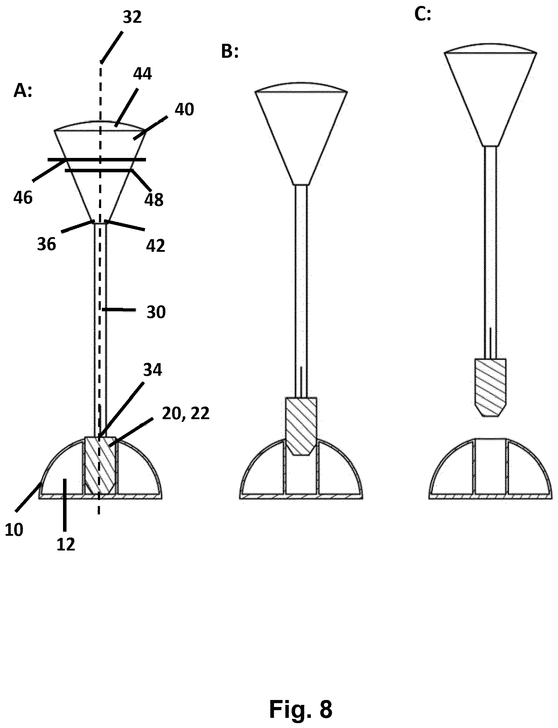

Fig. 8 illustrates a bottom-hinged wave energy converter WEC, wherein power converter 20 is releasably attached to the foundation 10 as shown from A to C. Thereby, the power converter 20 can be serviced without having to move the foundation 10.

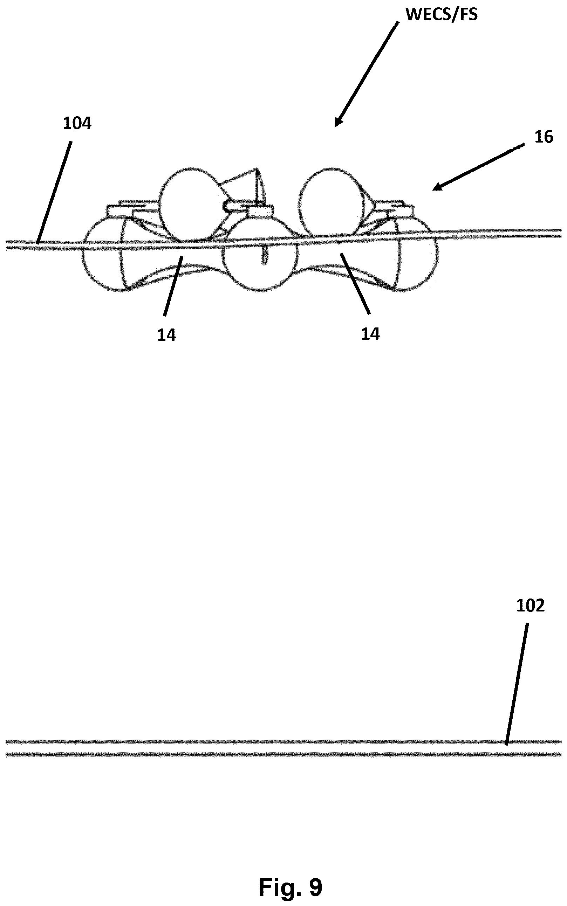

Fig. 9 illustrates a wave energy converter system WECS or a anchored floating wave energy converter system FS during transportation. In this case the foundation structure 16 comprises one or more ballast chambers which has been emptied to such an extent that the foundation structure 16 floats at the ocean surface 104.

This enables easy transportation as the wave energy converter system WECS or the anchored floating wave energy converter system FS can be dragged to the predetermined position.

Fig. 10 illustrates a graph showing mean power index as a function of a drag coefficient and an inertia coefficient.

## Claims

1. A bottom-hinged wave energy converter (WEC) comprising
- a foundation (10) defining an apparent foundation weight;
- a power converter (20) connected to the foundation (10), the power converter (20) comprises a crank (22);
- a flap arm (30) comprising along an arm axis (32) a crank end (34) connected to the crank (22) and a flap end (36);
- a flap (40) comprising a flap bottom (42) connected to the flap end (36), and a flap top (44) adapted to be at or near an ocean surface (102) during use, the flap (40) comprising a substantially circular or elliptic flap cross-section (46) in a cross-section plane (48) substantially perpendicular to the arm axis (32), which flap cross-section (46) is constant between or varies between or increases between the flap bottom (42) and the flap top (44) thereby defining a flap buoyancy, wherein the apparent foundation weight being lesser or greater than the flap buoyancy.

2. The bottom-hinged wave energy converter (WEC) according to claim 1, wherein the flap (40) comprises
a drag coefficient between 0.6-1.0 or 0.7-0.9 and/or
an inertia coefficient between 1.5-1.8 or 1.6-1.7.

3. The bottom-hinged wave energy converter (WEC) according to claim 1 or 2, wherein the foundation (10) comprises a ballast chamber (12) to adjust the apparent foundation weight.

4. The bottom-hinged wave energy converter (WEC) according to anyone or more of claims 1-3, wherein the flap (40) is substantially cone-shaped.

5. The bottom-hinged wave energy converter (WEC) according to anyone or more of claims 1-4, wherein the flap buoyancy is chosen as a function of localised wave climate such that the eigenfrequency of the wave energy converter (WEC) is substantially equal to a mean wave frequency of a dominating wave of the localised wave climate.

6. The bottom-hinged wave energy converter (WEC) according to anyone or more of claims 1-5, wherein the wave energy converter (WEC) comprises one or more anchors (60) attached to a seafloor (102) and to one or more nodes on the foundation (10) and where the wave energy converter (WEC) being a floating wave energy converter (FWEC) as the apparent foundation weight is slightly lower to the flap buoyancy.

7. A wave energy converter system (WECS) comprising two, three or more of bottom-hinged wave energy converters (WEC) according to anyone or more of claims 1-6, wherein each wave energy converter (WEC) being connected to at least one other wave energy converter (WEC) by a connection member (14) forming together with the foundations (10) a foundation structure (16).

8. The wave energy converter system () according to claim 7, wherein the foundation structure (16) comprises a hydro turbine generator and/or a desalination unit powered by the two, three or more of the bottom-hinged wave energy converters (WEC).

9. The wave energy converter system () according to claim 7 or 8, wherein the foundation structure (16) has a horizontal structure length (18) at least equal to or greater than a local mean wave wavelength, such as 2, 3, 5 ,10 or more times greater than the local mean wave wavelength.

10. A anchored floating wave energy converter system (FS) comprising two, three or more of the bottom-hinged wave energy converters (WEC) according to anyone or more of claims 1-6, wherein each wave energy converter (WEC) being connected to at least one other wave energy converter (WEC) by a connection member (14) forming together with the foundations (10) a foundation structure (16), the foundation structure (16) defining a foundation structure apparent weight being less than the flap buoyancies and the anchored floating wave energy converter system (FS) comprises one or more anchors (60) attached to a seafloor (102) and to one or more nodes on the foundation structure (16).

11. A anchored floating wave energy converter system (FS) according to claim 10, wherein the anchored floating wave energy converter system (FS) comprises a pylon (90) extending during use above an ocean surface, optionally the pylon (90) is adapted for receiving a wind turbine tower.

12. Method for optimizing a bottom-hinged wave energy converter (WEC) to a local wave environment to increase energy production, the method comprising the steps of
- providing wave statistics of the local wave environment including wavelength distribution, wave height distribution and wave occurrence;
- providing parameters of a bottom-hinged wave energy converter (WEC) according to anyone of claims 1-6 the parameters including flap cross-sections between flap bottom and flap top;
- optimizing the flap cross-section (46) as a function of the wave statistics of the local wave environment to maximise mean power production.

13. The method according claim 12, wherein the parameters include drag coefficient and/or inertia coefficient of the bottom-hinged wave energy converter (WEC).

14. Method for transporting a bottom-hinged wave energy converter (WEC) to a predetermined position, the method comprising steps of
- providing a bottom-hinged wave energy converter (WEC) according to anyone of claims 1-6, wherein the foundation (10) comprises a ballast chamber (12) to adjust the apparent foundation weight;
- adjusting a water volume of the ballast chamber (12) such that the wave energy converter (WEC) floats at an ocean surface (104);
- dragging the wave energy converter (WEC) to the predetermined position; and
- adjusting a water volume of the ballast chamber (12), such that the wave energy converter (WEC) is at least lowered at the predetermined position.

15. Use of a substantially cone-shaped body as a flap (40) of a bottom-hinged wave energy converter (WEC), wherein the cone-shape body comprising along a body axis a flap bottom (42) and a flap top (44), and a substantially circular or elliptic flap cross-section (46) in a cross-section plane perpendicular to the body axis, which flap cross-section (46) increases between a flap bottom (42) and a flap top (44), thereby defining a flap buoyancy.
